# EUROPÄISCHE PATENTANMELDUNG

(11) **EP 0 567 987 A1**
(43) Veröffentlichungstag der Anmeldung: **03.11.1993**
(21) Anmeldenummer: 93106786.2
(22) Anmeldetag: 27.04.1993
(51) Int. Cl.: D01F 6/60

(54) **Verfahren zur Herstellung von Fasern aus meta-Aramiden**

(30) Priorität: 30.04.1992 DE 4214461
(71) Anmelder: HOECHST AKTIENGESELLSCHAFT, D-65926 Frankfurt am Main (DE)
(72) Erfinder: Jung, Holger, Dr., W-6272 Niedernhausen (DE); Klein, Peter, Dr., W-6200 Wiesbaden (DE)

(57) **Zusammenfassung**

Beschrieben wird ein Verfahren zur Herstellung von Spinnfasern aus Aramiden enthaltend mindestens 95 Mol%, bezogen auf das Polymere, der wiederkehrenden Struktureinheit der Formel I

[-CO-R¹-CO-NH-R²-NH-] (I),

worin R¹ und R² unabhängig voneinander zweiwertige aromatische Reste sind, deren freie Valenzbindungen sich in m-Position oder in einer dazu vergleichbaren gewinkelten Stellung zueinander befinden, durch Verspinnen der Spinnlösung nach dem Trockendüsen-Naßspinnverfahren aus einer Spinndüse durch einen Gasraum in ein Fällbad, Abziehen und Nachbehandlung durch Waschen der Fäden.

Vorzugsweise wird durch Umsetzung von Diaminen der Formel II mit Dicarbonsäuredichloriden der Formel III in NMP als Lösungsmittel

H₂N-R²-NH₂ (II), ClOC-R¹-COCl (III),

eine direkt verspinnbare Polymerlösung hergestellt, die als faserbildende Substanz Polymere enthält, die mindestens 95 Mol%, bezogen auf das Polymere, der oben angegebenen wiederkehrenden Struktureinheit der Formel l aufweisen, worin R¹ und R² die in Anspruch 1 angegebene Bedeutung besitzen.

## Beschreibung

Die vorliegende Erfindung betrifft ein neues Verfahren zur Herstellung von Fasern aus meta-Aramiden.

Meta-Aramide, wie Poly-(isophthalsäure-m-phenylendiamid), sind handelsübliche Polymere, die insbesondere zu Fasern mit guten mechanischen Eigenschaften wie hoher Festigkeit, hoher Dehnung, und mit guter Chemikalienbeständigkeit verarbeitet werden können.

Üblicherweise werden meta-Aramide nach dem sogenannten Trockenspinnverfahren ersponnen. Dazu wird eine Spinnlösung in einem verdampfbaren Lösungsmittel hergestellt und diese Lösung durch eine Spinndüse in einen Spinnschacht versponnen, in dem das Spinnlösungsmittel so weit verdampft wird, daß die am Schachtende austretenden Spinnfäden nicht mehr verkleben. Beispiele für solche Trockenspinnverfahren finden sich in US-A-3,094,511, US-A-3,287,324, US-A-3,360,598 und DE-AS-1,282,843.

Üblicherweise ist die Zahl der Spinnfäden pro Spinndüse beim Trockenspinnverfahren deutlich geringer als bei Naßverfahren. Außerdem läßt sich die bei allen Spinnverfahren notwendige Lösungsmittelrückgewinnung bei Naßverfahren einfacher und in der Regel auch kostengünstiger gestalten als bei Trockenspinnverfahren. Es wäre deshalb wünschenswert, ein Naßverfahren zur Verfügung zu haben, bei dem sich die an die Fadenbildung anschließende Nachbehandlung ohne aufwendige Zwischenbehandlungen ausführen läßt.

Die andere bekannte Spinntechnik für m-Aramide ist das Naßspinnverfahren, bei der man die Spinnlösung durch eine Spinndüse direkt in ein Koagulationsbad verspinnt. Diese Naßspinnverfahren erfordern eine Reihe sorgfältig aufeinander abgestimmter Maßnahmen, wie z.B. in EP-A-0,226,137, DE-PS-2,325,139 und in DE-PS-1 ,243,820 beschrieben. Die m-Aramide werden zunächst hergestellt und dann in dem amidischen Spinnlösungsmittel wieder aufgelöst. Es erfolgt in der Regel kein Zusatz eines anorganischen Salzes oder nur ein sehr geringer Zusatz von 0,3 bis 3% bezogen auf das Gesamtgewicht der Spinnlösung.

Eine direkte Herstellung im Spinnlösungsmittel würde bei 20 Gew.% Polymer ca. 9 Gew.% des anorganischen Salzes und je nach Neutralisationsmittel ca. 1-3 Gew.% Wasser erzeugen. Chim. volokna 1971, Nr.4, 9-11 beschreibt, daß dies einen bedeutenden negativen Einfluß auf die Ausformung von Fasern durch das Naßspinnverfahren hat. Deshalb muß das Polymer wie in den oberen Schriften beschrieben zunächst hergestellt, isoliert und gereinigt werden bevor es im Spinnlösungsmittel wieder aufgelöst wird und durch Naßspinnverfahren zu Fasern geformt werden kann. Es handelt sich um ein zweistufigen Prozeß.

Das für andere spinnbare Polymere an sich bekannte Trockendüsen-Naßspinnverfahren ist für meta-Aramide bislang nicht beschrieben worden. Bei diesem Verfahren wird eine Spinnlösung nach dem Verlassen der Spinndüse zunächst durch einen Gasraum und sodann in ein Fällbad geführt. Das Verfahren ist beispielsweise in den US-A-3,767,756, DE-PS-2,219,703 und EP-A-21,484, -21,485, -45,934, -18,088, -1,23,531 beschrieben.

Es wurde jetzt gefunden, daß man das direkte Verspinnen von Spinnlösungen enthaltend meta-Aramide sowie durch Neutralisation entstandenes Alkalichlorid und/oder Erdalkalichlorid und Wasser nach dem Trockendüsen- Naßspinnverfahren durchführen kann.

Das Trockendüsen-Naßspinnverfahren ist für para-Aramide an sich bekannt und wird beispielsweise in der US-A-3,767,756 beschrieben. Voraussetzung für das vorbekannte Verfahren ist, daß als Spinnlösungsmittel Schwefelsäure oder Chlor-bzw. Fluorschwefelsäure eingesetzt werden. Es liegt auf der Hand, daß die im Verfahren der US-A-3,767,756 eingesetzten Spinnlösungsmittel aufgrund ihrer Agressivität Schwierigkeiten beim Umgehen mit der Spinnlösung bzw. beim Verspinnen bereiten. Einer der Gründe für die Verwendung derart agressiver Spinnlösungsmittel ist darin zu sehen, daß möglichst hoch konzentrierte Spinnlösungen zum Einsatz kommen sollen.

Demgegenüber beinhaltet das erfindungsgemäße Verfahren den Einsatz von meta-Aramiden und von organischen Lösungsmitteln als Spinnlösungsmittel. Das Entfallen von Schwefelsäure als Spinnlösungsmittel bringt beträchtliche verfahrenstechnische Vorteile mit sich, da z.B. die Korrosion von Anlageteilen vermieden werden kann bzw. Sicherheits- und Überwachungseinrichtungen eingespart werden können. So müssen z.B. keine aufwendigen Kontrollen installiert werden, um den Wassergehalt der Spinnlösung zu überwachen.

Obwohl im erfindungsgemäßen Verfahren organische Lösungmittel eingesetzt werden, gestattet dieses das Verspinnen hochkonzentrierter Spinnlösungen. Diese hohen Polymerkonzentrationen werden unter anderem dadurch ermöglicht, daß die Spinnlösung Salze enthält.

Es wurde gefunden, daß die Gegenwart von Salzen in der Spinnlösung zu Problemen beim konventionellen Naßspinnverfahren von meta-Aramiden führt; ein Verspinnen solcher Lösungen wird dadurch ermöglicht, daß man die Methode des Trockendüsen-Naßspinnens anwendet.

Die vorliegende Erfindung betrifft ein Verfahren zur Herstellung von Spinnfasern aus Aramiden enthaltend enthaltend mindestens 95 Mol%, bezogen auf das Polymere, der wiederkehrenden Struktureinheit der Formel I

[-CO-R¹-CO-NH-R²-NH-] (I)

worin R¹ und R² unabhängig voneinander zweiwertige aromatische Reste sind, deren freie Valenzbindungen sich in m-Position oder in einer dazu vergleichbaren gewinkelten Stellung zueinander befinden, umfassend die Maßnahmen:
a) Herstellung einer Spinnlösung enthaltend ein organisches Lösungsmittel als Spinnlösungsmittel, das oben definierte Aramid und Alkalihalogenid und/oder Erdalkalihalogenid, insbesondere Alkalichlorid und/oder Erdalkalichlorid, und gegebenenfalls Wasser
b) Verspinnen der Spinnlösung nach dem Trockendüsen-Naßspinnverfahren aus einer Spinndüse durch einen Gasraum in ein Fällbad,
c) Koagulation der Spinnfäden im Fällbad,
d) Abziehen der koagulierten Fäden aus dem Fällbad und
e) Waschen der Fäden.

Als faserbildende Polymere setzt man im erfindungsgemäßen Verfahren meta-Aramide ein, die mindestens 95 Mol%, bezogen auf das Polymere, an wiederkehrenden Struktureinheiten der oben definierten Formel 1 aufweisen. Daneben können die meta Aramide noch bis zu 5 Mol %, bezogen auf das Polymere, an sonstigen zweiwertigen aromatischen, aliphatischen oder cycloaliphatischen Resten aufweisen, die sich von aromatischen, aliphatischen oder cycloaliphatischen Dicarbonsäuredichloriden und/-oder Diaminen ableiten.

Die Reste R¹ und/oder R² in einem Molekül können ein und dieselbe Bedeutung aufweisen, sie können sich aber im Rahmen der gegebenen Definition innerhalb eines Moleküls auch unterscheiden.

Bedeuten R¹ und/oder R² irgendwelche zweiwertige aromatische Reste, deren Valenzbindungen sich in meta- oder in vergleichbarer gewinkelter Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über Brückengruppen, wie z.B. -O-, -CH₂-, -S-, -CO- oder SO₂-miteinander verknüpft sein.

Beispiele für mehrkernige aromatische Reste, deren Valenzbindungen sich in meta-oder in vergleichbarer gewinkelter Position zueinander befinden, sind 1,6-Naphthylen, 2,7-Naphthylen oder 3,4'-Biphenyldiyl. Ein bevorzugtes Beispiel für einen einkernigen aromatischen Rest dieses Typs ist 1 ,3-Phenylen.

Die erfindungsgemäß eingesetzen Polymeren werden durch Lösungspolykondensation hergestellt. Die Polykondensation kann in den üblichen organischen nichtbasischen Lösungsmitteln erfolgen, beispielsweise in halogenierten organischen Lösungsmitteln. Beispiele für solche Herstellungsverfahren sind in der US-A-3,094,511 oder in der DE-AS-1,107,399 zu finden. Nach der Herstellung werden die Polymeren in der Regel ausgefällt und nach dem Waschen in dem Spinnlösungsmittel, üblicherweise einem aprotischen organischen Amid-Lösungsmittel, wieder aufgelöst.

Das erfindungsgemäße Verfahren betrifft aber insbesondere auch die direkte Herstellung der Spinnlösung durch Polykondensation in einem organischen aprotischen Amidlösungsmittel.

Die Herstellung einer Spinnlösung enthaltend das Spinnlösungsmittel, das oben definierte Aramid und Alkalihalogenid und/oder Erdalkalihalogenid und gegebenenfalls Wasser kann auf alle an sich bekannten Arten erfolgen. Zweckmäßigerweise wird das Aramid im vorgesehenen Spinnlösungsmittel gelöst und der Spinnlösung werden zwecks Erhöhung der Löslichkeit des Polymeren Alkali- und/oder Erdalkalihalogenide, bevorzugt die entsprechenden Chloride, insbesondere Lithiumchlorid oder ganz besonders bevorzugt Calciumchlorid zugesetzt. Die eingesetzten Spinnlösungen sind isotrop.

Bei der Polykondensation des Aramids im Spinnlösungsmittel fallen diese Salze sowie Wasser bereits beim Neutralisieren an.

Als Lösungsmittel kommen organische Lösungsmittel in Frage. Bevorzugt verwendet man aprotische organische Lösungsmittel oder ein Gemisch solcher Lösungsmittel.

Davon sind besonders bevorzugt die Spinnlösungsmittel ausgewählt aus der Gruppe bestehend aus Dimethylacetamid, Dimethylformamid, Tetramethylharnstoff und insbesondere N-Methylpyrrolidon.

In einer besonders bevorzugten Ausführungsform der vorliegenden Erfindung wird eine direkt verspinnbare Polymerlösung hergestellt, die als faserbildende Substanz Polymere enthält, die mindestens 95 Mol%, bezogen auf das Polymere, der oben definierten wiederkehrenden Struktureinheit der Formel I aufweisen. Die Herstellung der direkt verspinnbaren Polymerlösung erfolgt durch Umsetzung von Diaminen der Formel II mit Dicarbonsäuredichloriden der Formel III in NMP als Lösungsmittel

H₂N-R²-NH₂ (II), ClOC-R¹-COCl (III),

worin R¹ und R² die weiter oben angegenbene Bedeutung aufweisen, umfassend die Maßnahmen
i) Vorlage der Diamine der Formel II als Lösung in N-Methylpyrrolidon (NMP],
ii) Zugabe der Dicarbonsäuredichloride zu dieser Lösung,
iii) Einsatz von Ausgangsmonomeren mit einer Reinheit von größer als 99,9 % und einem Wassergehalt von weniger als 70 ppm, gemessen nach der Methode von Karl-Fischer,
iv) Polykondensation unter Zwangsführung der Reaktionslösung bei Temperaturen zwischen - 20 und 100°C, und
v) Abbrechen der Polykondensation beim Erreichen einer inhärenten Viskosität des Polymeren von mindestens 1,5 dl/g, gemessen an einer 0,5 %igen Polymerlösung in konz. H₂SO₄ bei 25°C, durch Neutralisieren der Reaktionslösung durch Zugabe von basischen Alkali- und/oder Erdalkalisalzen.

Vor dem Neutralisieren der Reaktionslösung kann die Polykondensation durch Zugabe einer monofunktionellen Säurechloridkomponente, wie z.B. Acetylchlorid oder Benzoylchlorid, abgestoppt werden.

Die Konzentration des Aramids in der Spinnlösung beträgt üblicherweise 8 bis 25 Gew.%, bezogen auf die Spinnlösung.

Es hat sich überraschenderweise herausgestellt, daß Spinnlösungen mit hohen Aramidkonzentrationen plus hohen Salzkonzentrationen plus Wasser nach dem erfindungsgemäßen Verfahren verarbeitet werden können. Vorzugsweise beträgt die Polymerkonzentration 10 bis 25 Gew.%, insbesondere 15 bis 25 Gew.%, bezogen auf die Spinnlösung.

Die Konzentration des Alkali- bzw. Erdalkalichlorids in der Spinnlösung beträgt üblicherweise 9 bis 13 Gew. % und die des Wassers 1-6%, bezogen auf die Spinnlösung.

Das Verspinnen der Spinnlösung erfolgt nach dem an sich bekannten Trockendüsen-Naßspinnverfahren.

Dazu können die an sich bekannten Spinndüsen eingesetzt werden. Typische Düsenlochzahlen bewegen sich im Bereich von 50 bis 600. Die Düsenlöcher können beliebige Profile aufweisen, beispielsweise runde, drei- oder rechteckige oder tri- oder multilobale Querschnitte. Typische Düsenlochdurchmesser bewegen sich im Bereich von 50 bis 150 µm.

Der Gasraum zwischen dem Austritt der geformten Polymerlösung aus der Spinndüse und dem Eintritt in das Fällbad kann aus beliebigen Gasen bestehen. Bevorzugt wird Luft. Die Dicke dieses Gasraumes bewegt sich typischerweise zwischen 5 und 200 mm, vorzugsweise zwischen 10 und 50 mm.

Als Fällbad lassen sich alle für diesen Zweck geeigneten Bäder einsetzen, bevorzugt sind wässrige Fällbäder.

Besonders bevorzugt sind wässrige Fällbäder, die das jeweils verwendete Spinnlösungsmittel enthalten.

Als polares organisches Lösungsmittel wird in der Koagulationsflüssigkeit vorzugsweise dasselbe Lösungsmittel verwendet, welches in der Ausformlösung enthalten ist. Die Koagulationsflüssigkeit wird vorzugsweise bei einer Temperatur zwischen 0°C und der Siedetemperatur der Koagulationsflüssigkeit bei Atmosphärendruck eingesetzt.

Das polare organische Lösungsmittel liegt in der Koagulationsflüssigkeit vorzugsweise in einer Konzentration zwischen 70 Gew.-% und weniger vor, insbesondere zwischen 50 Gew.-% und weniger.

Das Verspinnen der Spinnlösung in das Fällbad erfolgt zweckmäßigerweise bei Spinnverzügen (Abzugsgeschwindigkeit/Spritz-geschwindigkeit) zwischen 0,8 und 3,0, vorzugsweise zwischen 0,8 und 1,8. Insbesondere wird bei Spinnverzügen >1 gearbeitet.

Nach der Koagulation der Fäden werden diese aus dem Fällbad abgezogen. Typische Abzugsgeschwindigkeiten bewegen sich im Bereich von 10 bis 100 m/min, vorzugsweise 12 bis 40 m/min.

Üblicherweise werden die auf dieser Stufe erhaltenen Gelfäden unmittelbar der Nachbehandlung zugeführt.

An die erste Koagulation schließt sich vorzugsweise ein weiterer Koagulationsschritt an, in dessen Verlauf die koagulierenden Filamente des Aramids in ein Wasserbad eingeleitet werden, welches auf einer Temperatur zwischen 25 und 100°C gehalten wird. Es schließt sich eine intensive Wasserwäsche an bis der Gehalt an Chloridionen in der Faser <0,2 Gew.-% ist. Dazu werden üblicherweise mehrere Heißwasserbäder durchlaufen.

Fasern die nach den vorstehend angegebenen Ausformverfahren hergestellt werden, werden gewöhnlich einem Streckvorgang unterworfen, durch den nicht nur die mechanischen Eigenschaften, wie z.B. die Zugfestigkeit und der Elastizitätsmodul, gefördert werden sondern auch die thermischen Eigenschaften, wie z.B. die thermische Stabilität der so hergestellten Filamente.

Vorzugsweise schließt sich die Verstreckung direkt an die Wäsche an.

Bevor die Verstreckung durchgeführt werden kann wird dem Faden üblicherweise ein gewisser Anteil eines organischen Lösungsmittels, beispielsweise NMP, zugeführt, um diesen für die Verstreckung zu plastifizieren. Anschließend wird der Faden einer Naßverstreckung unterworfen. Dies erfolgt vorzugsweise in einem NMP/Wasser Schwallbad der bevorzugten Zusammensetzung 70/30 bis 30/70. Das Verstreckverhältnis liegt in der Regel zwischen 1:2 und 1:4. Das weitere Strecken kann in einem einzigen Schritt, in zwei Schritten oder in mehreren Schritten ausgeführt werden, wobei zum Aufheizen eine Heizplatte oder eine zylindrische Heizvorrichtung verwendet werden kann. Außerdem können die gestreckten Filamente einer weiteren Wärmebehandlung bei gleicher oder höherer Temperatur unterworfen werden, um ihre kristalline Struktur zu fördern.

Die Fasern aus einem Aramid gemäß der Erfindung, welche gute mechanische und thermische Eigenschaften besitzen können auf die verschiedenste Weise industriell eingesetzt werden, beispielsweise als wärmebeständige Isolationsmaterialien, zur Herstellung von Filtergeweben und als leichte Dämmstoffe.

Weitere Eigenschaften und Vorteile der Erfindung werden nachstehend anhand von Beispielen noch näher erläutert.

Dabei versteht es sich jedoch, daß die Erfindung nicht auf die Ausführungsbeispiele beschränkt ist. Vielmehr stehen dem Fachmann, ausgehend von den Ausführungsbeispielen, zahlreiche Möglichkeiten für Änderungen und/oder Ergänzungen zu Gebote, ohne daß er dabei den Grundgedanken der Erfindung verlassen müßte.

### Beispiel 1: Herstellung einer direkt verspinnbaren Lösung von Poly-(isophthalsäure-m-phenylendiamid] in NMP

324.5g (3mol] m-Phenylendiamin werden in 2396 ml NMP gelöst und zwischen -10 und 70⁰C mit 609g (3mol] Isophtaloylchlorid versetzt. Das Säurechlorid wird in fester Form zudosiert. Nach Zugabe von ca. 98 mol% ist ein Anstieg der Viskosität zu beobachten. Bei Erreichen eines definierten Rührwiderstandes 35 Nm bei 50 Upm und 50°C wird die Reaktion durch Zugabe von Acetylchlorid abgestoppt. Dann erfolgt die Neutralisation mit 40 g CaO (50 %ige Suspension in NMP). Es entstehen 714 g Polymer, 333 g CaCl₂ und 54 g Wasser. Es liegt eine homogene Lösung in NMP vor (20 Gew.%). Die inhärente Viskosität in conc. H₂SO₄ bei 25°C beträgt 1.7 dl/g. Die Lösung wird noch 2 Stunden nachgerührt und dann über 10 µ filtriert.

### Beispiel 2: Verspinnen der gemäß Beispiel 1 hergestellten Polymerlösung

Die gemäß Beispiel 1 hergestellte Spinnlösung in NMP enthaltend 20 Gew. % Poly-m-isophthalamid, 9 Gew.% Calziumchlorid und 1.4 Gew.% Wasser wird auf 80°C geheizt und dann über eine Spinnpfeife (130°C) zu einer Trocken-Naßspinndüse (80°C) gefördert. Die Düse besitzt 50 Loch mit 1 mm Durchmesser. Es wird dann mit einem 20 mm großem Luftspalt zur Fällbadoberfläche angesponnen. Das Fällbad besteht aus 35% NMP und 65 % Wasser. Die Fällbadtemperatur beträgt 25°C. Die Fällstrecke im Fällbad beträgt 75 cm. Die Spritzgeschwindigkeit beträgt 9.3 m/min. Der Abzug aus dem Fällbad beträgt 16 m/min. Dann werden mehrere Waschbäder durchlaufen (mit Wasser bei RT). Dann wird eine Waschmaschine durchlaufen die 85°C heißes Wasser beinhaltet. Der Chlorgehalt der Faser beträgt nach der Wäsche 0.07%. Es erfolgt dann eine weitere Naßverstreckung im NMP/Wasserschwallbad (40/60) bei 50°C. Der Faden wird von 16 auf 34 m/min verstreckt. Dann erfolgt ein Präparationsauftrag dem eine Trocknung auf heißen Galetten bei 120°C und bei 240°C folgt. Die Endverstreckung und Fixierung erfolgt auf 4 Bügeleisen, bei denen die hinteren beiden eine Temperatur von 350°C haben. Der Endabzug erfolgt mit 43 m/min. Die Gesamtverstreckung liegt bei 4.6 fach. Die Reißfestigkeit liegt bei 33 cN/tex bei 17 % Dehnung. Der Modul beträgt 10 N/tex.

## Patentansprüche

1. Verfahren zur Herstellung von Spinnfasern aus Aramiden enthaltend mindestens 95 Mol%, bezogen auf das Polymere, der wiederkehrenden Struktureinheit der Formel I
[-CO-R¹-CO-NH-R²-NH-] (I)
worin R¹ und R² unabhängig voneinander zweiwertige aromatische Reste sind, deren freie Valenzbindungen sich in m-Position oder in einer dazu vergleichbaren gewinkelten Stellung zueinander befinden, umfassend die Maßnahmen
a) Herstellung einer Spinnlösung enthaltend ein organisches Lösungsmittel als Spinnlösungsmittel, das oben definierte Aramid und Alkalihalogenid und/oder Erdalkalihalogenid und gegebenenfalls Wasser,
b) Verspinnen der Spinnlösung nach dem Trockendüsen-Naßspinnverfahren aus einer Spinndüse durch einen Gasraum in ein Fällbad,
c) Koagulation der Spinnfäden im Fällbad,
d) Abziehen der koagulierten Fäden aus dem Fällbad und
e) Nachbehandlung durch Waschen der Fäden.

2. Verfahren nach Anspruch 1, dadurch gekennzeichnet, daß das es sich bei dem Alkalihalogenid und/oder Erdalkalihalogenid um ein Chlorid handelt.

3. Verfahren nach Anspruch 1, dadurch gekennzeichnet, daß eine Spinnlösung eingesetzt wird, deren Polymerkonzentration 10 bis 25 Gew.%, insbesondere 15 bis 25 Gew. %, bezogen auf die Spinnlösung, ausmacht.

4. Verfahren nach Anspruch 1, dadurch gekennzeichnet, daß eine Spinnlösung eingesetzt wird, deren Salzkonzentration 5 bis 15 Gew.%, insbesondere 9 bis 13 Gew.%, bezogen auf die Spinnlösung, ausmacht.

5. Verfahren nach Anspruch 1, dadurch gekennzeichnet, daß eine Spinnlösung eingesetzt wird, deren Wasserkonzentration 1 bis 6 Gew.%, insbesondere 1.2 bis 3 Gew. %, bezogen auf die Spinnlösung, ausmacht.

6. Verfahren nach Anspruch 1, dadurch gekennzeichnet, daß die Polykondensation der das faserbildende Polymere aufbauenden Diamine und Dicarbonsäuredichloride im jeweiligen Spinnlösungsmittel durchgeführt wird, die Polykondensation beim Erreichen der gewünschten Viskosität der Polymerlösung durch Neutralisieren der Reaktionslösung durch Zugabe von basischen Alkali-und/oder Erdalkalisalzen abgebrochen wird und ungelöste Bestandteilen aus der Reaktionslösung entfernt werden.

7. Verfahren nach Anspruch 1, dadurch gekennzeichnet, daß das Spinnlösungsmittel ein aprotisches organisches Lösungsmittel oder ein Gemisch solcher Lösungsmittel ist.

8. Verfahren nach Anspruch 7, dadurch gekennzeichnet, daß das Spinnlösungsmittel ausgewählt wird aus der Gruppe bestehend aus Dimethylacetamid, Dimethylformamid, Tetramethylharnstoff und insbesondere N-Methylpyrrolidon.

9. Verfahren nach Anspruch 1, dadurch gekennzeichnet, daß die Spinnlösung ohne Unterbrechung der Verspinnung zugeführt wird.

10. Verfahren nach Anspruch 1, dadurch gekennzeichnet, daß durch Umsetzung von Diaminen der Formel II mit Dicarbonsäuredichloriden der Formel III in NMP als Lösungsmittel
H₂N-R²-NH₂ (II), ClOC-R¹-COCl (III),
eine direkt verspinnbare Polymerlösung hergestellt wird, die als faserbildende Substanz Polymere enthält, die mindestens 95 Mol%, bezogen auf das Polymere, der in Anspruch 1 definierten wiederkehrenden Struktureinheit der Formel I aufweisen, worin R¹ und R² die in Anspruch 1 angegebene Bedeutung besitzen, umfassend die Maßnahmen
i) Vorlage der Diamine der Formel II als Lösung in N-Methylpyrrolidon (NMP],
ii) Zugabe der Dicarbonsäuredichloride zu dieser Lösung,
iii) Einsatz von Ausgangsmonomeren mit einer Reinheit von größer als 99,9 % und einem Wassergehalt von weniger als 70 ppm, gemessen nach der Methode von Karl Fischer,
iv) Polykondensation unter Zwangsführung der Reaktionslösung bei Temperaturen zwischen - 20 und 100°C, und
v) Abbrechen der Polykondensation beim Erreichen einer inhärenten Viskosität des Polymeren von mindestens 1,5 dl/g, gemessen an einer 0,5 %igen Polymerlösung in konz. H₂SO₄ bei 25°C, durch Neutralisieren der Reaktionslösung durch Zugabe von basischen Alkali- und/oder Erdalkalisalzen.

11. Verfahren nach Anspruch 1, dadurch gekennzeichnet, daß das Fällbad eine wässrige Lösung des jeweils verwendeten Spinnlösungsmittels ist, die gegebenenfalls zusätzliche Salze, insbesondere Calziumchlorid, enthält.

12. Verfahren nach Anspruch 1, dadurch gekennzeichnet, daß durch einen Luftspalt in das Fällbad gesponnen wird, insbesondere durch einen Luftspalt, von 10 bis 50 mm Dicke.

13. Verfahren nach Anspruch 1, dadurch gekennzeichnet, daß das Ausspinnen mit Spinnverzügen >1 erfolgt.

14. Verfahren nach Anspruch 1, dadurch gekennzeichnet, daß die Abzugsgeschwindigkeit der Spinnfäden aus dem Fällbad 10 bis 40 m/min beträgt.

15. Verfahren nach Anspruch 1, dadurch gekennzeichnet, daß sich an die Wäsche direkt die Verstreckung anschließt.

16. Verfahren nach Anspruch 1, dadurch gekennzeichnet, daß als faserbildendes Polymeres eine Verbindung eingesetzt wird, worin R¹ und R² 1 ,3-Phenylen bedeuten.
